# EUROPÄISCHE PATENTSCHRIFT

(11) **EP 2 710 872 B1**
(45) Veröffentlichungstag und Bekanntmachung des Hinweises auf die Patenterteilung: **18.05.2016**
(21) Anmeldenummer: 13401093.3
(22) Anmeldetag: 23.08.2013
(51) Int. Cl.: A01B 73/04

(54) **Bodenbearbeitungsmaschine**
Soil working machine
Machine de traitement de sol

(30) Priorität: 20.09.2012 DE 102012108852; 12.07.2013 DE 102013011694
(43) Veröffentlichungstag der Anmeldung: 26.03.2014
(60) Teilanmeldung: 15175409.0
(73) Patentinhaber: Amazonen-Werke H. Dreyer GmbH & Co. KG, 49205 Hasbergen (DE)
(72) Erfinder: Bornhorst, Werner, 49413 Dinklage (DE); Gieseke, Reinhard, 27798 Hude (DE)

(56) Entgegenhaltungen:
- EP-A1- 1 698 219
- GB-A- 2 071 474

## Beschreibung

Die Erfindung betrifft eine Bodenbearbeitungsmaschine gemäß des Oberbegriffes des Patentanspruches 1.

Eine derartige Bodenbearbeitungsmaschine ist in EP 1 698 219 A1 beschrieben. Diese Bodenbearbeitungsmaschine weist einen als Mittelrahmen ausgebildeten Anbaubock auf, an dem Dreipunktkupplungselemente zum Anbau der Bodenbearbeitungsmaschine an dem Dreipunktkraftheber eines Ackerschlepper angeordnet sind. An dem Mittelrahmen sind auf seinen beiden Seiten Gelenkelemente angeordnet, die mit an dem als Kastenbalken ausgebildeten Tragrahmen angeordneten Gelenkelementen über Gelenkbolzen miteinander schwenkbar verbunden sind und die Tragkräfte übertragenden Schwenkgelenke bilden. An dem Mittelrahmen ist ein Zentralgetriebe mit einem Getriebegehäuse angeordnet, welches in seinem jeweiligen Außenbereich eine kreisförmige Aussparung aufweist, in welche ein kreisförmiger Ansatz des den jeweiligen Kastenbalken zugeordneten und die Zwischenwelle aufnehmenden Getriebegehäuses eingreift. Dieses ineinandergreifen der verschwenkbar zueinander angeordneten Getriebegehäuse dient lediglich der Zentrierung dieser Gehäuse zueinander. Die Schwenkverbindung zwischen den ineinandergreifenden Getriebegehäusen hat keine tragende Funktion zur Übertragung von Tragkräften vom Mittelrahmen auf die seitlichen Tragrahmen und umgekehrt. Hierzu sind separate Rahmenteile, die nicht Bestandteil des Getriebegehäuses des Zentralbetriebes sind, vorgesehen.

Um die Gelenkverbindungen zwischen dem Mittelrahmen und den als Kastenbalken ausgebildeten Tragrahmen zu vereinfachen, ist in einer Ausführungsform erfindungsgemäß vorgesehen, dass jeweils eine der an dem Kastenbalken angeordneten Gelenklaschen von dem Getriebegehäuse des Zwischengetriebes gebildet wird.

Infolge dieser Maßnahme bildet das Getriebegehäuse des Zwischengetriebes eine Gelenklasche der Gelenkelemente, so dass ein separates Bauteil für eine der dem Kastenbalken zugeordneten Gelenklaschen nicht erforderlich ist.

In einer bevorzugten Ausführung ist vorgesehen, dass das jeweilige Getriebegehäuse des Zwischengetriebes die vordere Gelenklasche der Schwenkgelenke bildet.

Der Erfindung liegt die Aufgabe zu Grunde, den Aufbau der den Mittelrahmen und die seitlichem Tragrahmen miteinander verbindenden und Tragkräfte übertragenden Schwenkgelenke zu vereinfachen.

Diese Aufgabe wird erfindungsgemäß dadurch gelöst, dass das Getriebegehäuse des Zentralgetriebes tragender Bestandteil des Mittelrahmens ist und auf jeder Seite der Bodenbearbeitungsmaschine zumindest ein Gelenkelement eines Schwenkgelenkes des Mittelrahmens bildet.

In Folge dieser Maßnahme kann beim Mittelrahmen auf der Seite, auf der das Getriebegehäuse mit dem Stirnradtrieb des Zentralbetriebes angeordnet ist, auf zusätzliche Bauteile, die die Gelenkelemente des Schwenkgelenkes bilden, verzichtet werden. Diese Gelenkelemente werden von dem Getriebegehäuse selber gebildet. Hierdurch wird die Ausgestaltung des Mittelrahmens unter Verzicht auf zusätzliche Bauteile zur Schaffung von Schwenkelementen erheblich vereinfacht.

Eine einfache Ausgestaltung und Anordnung des Schwenkgelenkes im Bereich des Zentralgetriebes lässt sich dadurch verwirklichen, dass das jeweilige Gelenkelement des Tragrahmens an dem an dem Getriebegehäuse des Zentralgetriebes angeordnetem Gelenkelement angelenkt ist.

Um das Zentralgetriebe als Tragkraft übertragendes Bestandteil auszubilden, ist vorgesehen, dass jeweils ein Gelenkelement des Tragrahmens und der als Gelenkelement ausgebildete äußere Bereich des Getriebegehäuses des Zentralgetriebes ein tragendes Bauteil der Schwenkgelenkes sind.

Eine einfache Ausgestaltung der Gelenkelemente der Schwenkgelenke, welche dem Zentralgetriebe zugeordnet sind, lässt sich dadurch erreichen, dass das an dem Zentralgetriebe angeordnete Schwenkelement als Gelenkbolzen oder als Gelenkhülse ausgebildet ist, dass auf dem Außenumfang des Gelenkbolzens oder der Gelenkhülse das Schwenkelement des Tragrahmens den Gelenkbolzen oder die Gelenkhülse umgreifend angeordnet ist.

Eine einfache Lagerung der Zwischenwelle lässt sich dadurch verwirklichen, dass in der Gelenkhülse zumindest teilweise die Zwischenwelle gelagert ist.

Bei einer Bodenbearbeitungsmaschine, welche auf der Vorder- und Rückseite des Tragrahmens und des jeweiligen Tragrahmen ein die Schwenkelemente aufweisendes Schwenkgelenk aufweist, ist vorgesehen, dass auf der Seite, auf der das Getriebegehäuse angeordnet ist, die Gelenkelemente des Schwenkgelenkes nur am Getriebegehäuse angeordnet sind. Hierdurch wird ein einfacher Aufbau der Tragrahmen und des Mittelrahmens sowie deren Schwenkgelenke zur Tragkraftübertragung erreicht.

Bei einer Bodenbearbeitungsmaschine, welche auf der Vorder- und Rückseite des Tragrahmens und des jeweiligen Tragrahmen ein die Schwenkelemente aufweisendes Schwenkgelenk aufweist, ist vorgesehen, dass auf der Seite, auf der das Getriebegehäuse angeordnet ist, die Gelenkelemente des Schwenkgelenkes nur von den am Getriebegehäuse des Zentralgetriebes angeordneten Schwenkelementen gebildet werden. Somit wird eine einfache Ausgestaltung der Tragrahmen und des Mittelrahmens sowie deren Schwenkgelenke zur Tragkraftübertragung erreicht.

Weitere Einzelheiten der Erfindung sind der Beispielsbeschreibung zu entnehmen. Die Zeichnungen zeigen
- Fig.1: die erfindungsgemäße Bodenbearbeitungsmaschine mit Mittelrahmen und zwei daran mittels Schwenkgelenken einklappbar angeordneten seitlichen als Kastenbalken ausgebildete Tragrahmen in Arbeitsstellung und in perspektivischer Ansicht von hinten,
- Fig.2: die erfindungsgemäße Bodenbearbeitungsmaschine mit Mittelrahmen und zwei daran mittels Schwenkgelenken einklappbar angeordneten seitlichen als Kastenbalken ausgebildete Tragrahmen in Transportstellung und in perspektivischer Ansicht von hinten,
- Fig.3: der mittlere Bereich der Bodenbearbeitungsmaschine gemäß Fig.1 in vergrößertem Maßstab,
- Fig.4: der mittlere Bereich der Bodenbearbeitungsmaschine gemäß Fig.3, jedoch in Explosionsdarstellung,
- Fig.5: der mittlere Bereich der Bodenbearbeitungsmaschine gemäß Fig.4, in weitergehender Explosionsdarstellung,
- Fig.6: die Bodenbearbeitungsmaschine in der Ansicht VI - VI.
- Fig.7: die erfindungsgemäße Bodenbearbeitungsmaschine mit Mittelrahmen und zwei daran mittels Schwenkgelenken einklappbar angeordneten seitlichen als Kastenbalken ausgebildete Tragrahmen in Arbeitsstellung und in perspektivischer Ansicht von hinten,
- Fig.8: die erfindungsgemäße Bodenbearbeitungsmaschine mit Mittelrahmen und zwei daran mittels Schwenkgelenken einklappbar angeordneten seitlichen als Kastenbalken ausgebildete Tragrahmen in Transportstellung und in der Ansicht von hinten,
- Fig.9: der mittlere Bereich der Bodenbearbeitungsmaschine gemäß Fig.7 in vergrößertem Maßstab,
- Fig.10: der mittlere Bereich der Bodenbearbeitungsmaschine gemäß Fig.9, jedoch in Explosionsdarstellung,
- Fig. 11: die Bodenbearbeitungsmaschine in der Ansicht XI - XI und
- Fig. 12: der Bereich der Schwenklagerung der Bodenbearbeitungsmaschine in der Ansicht XI - XI.

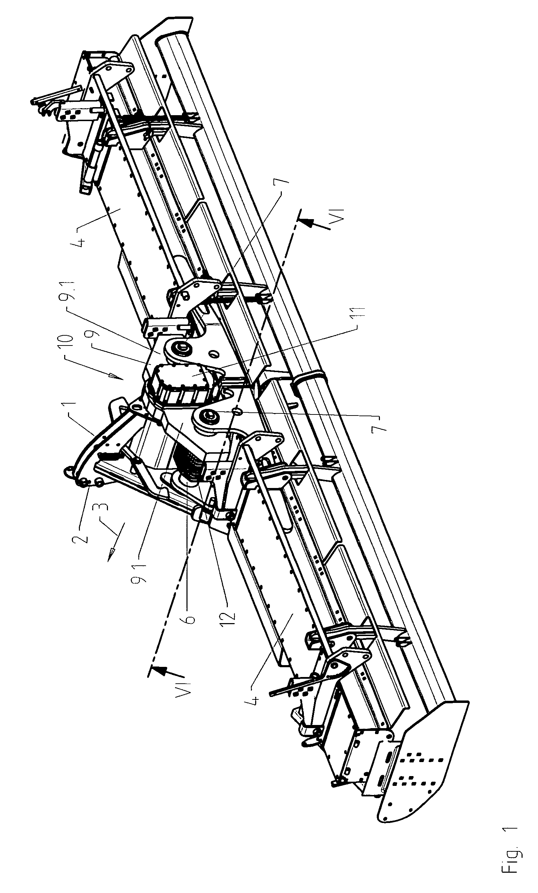

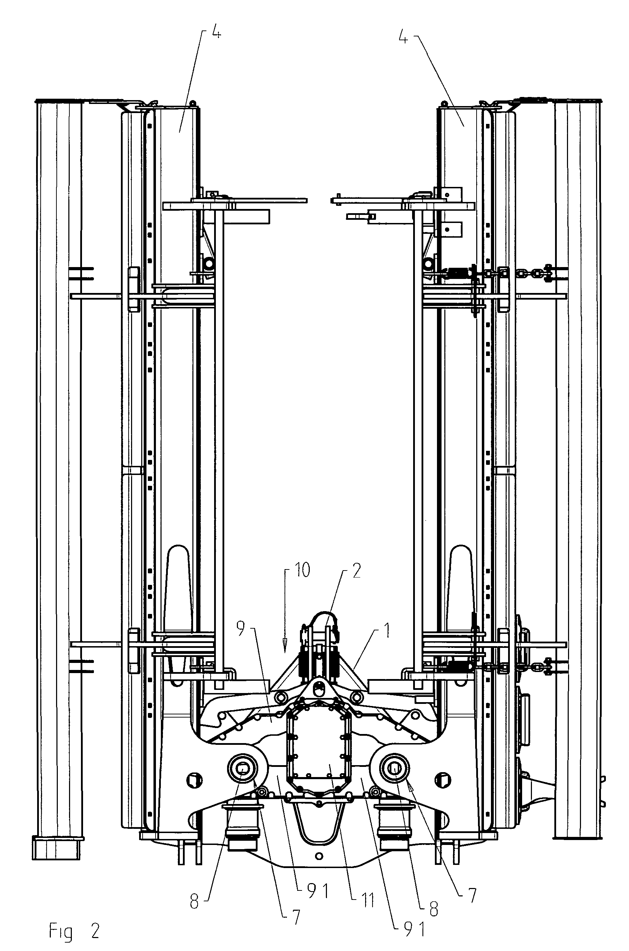

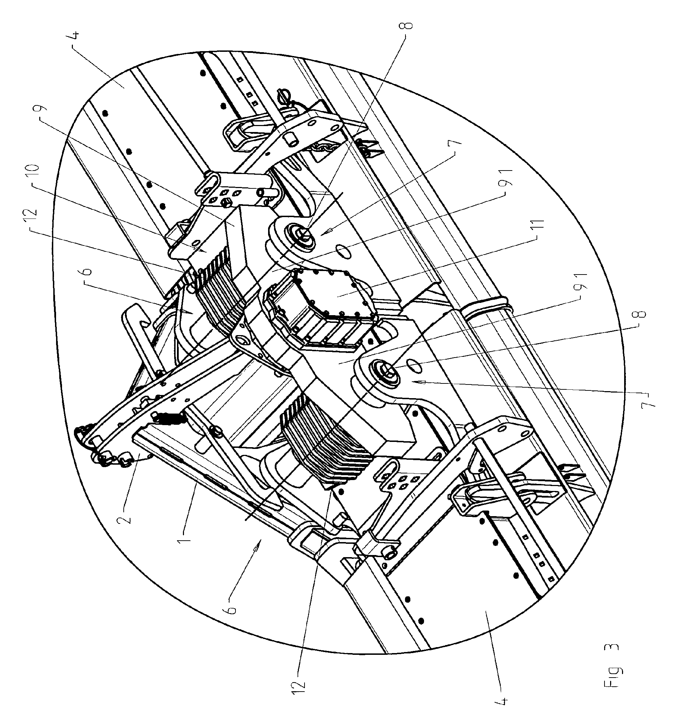

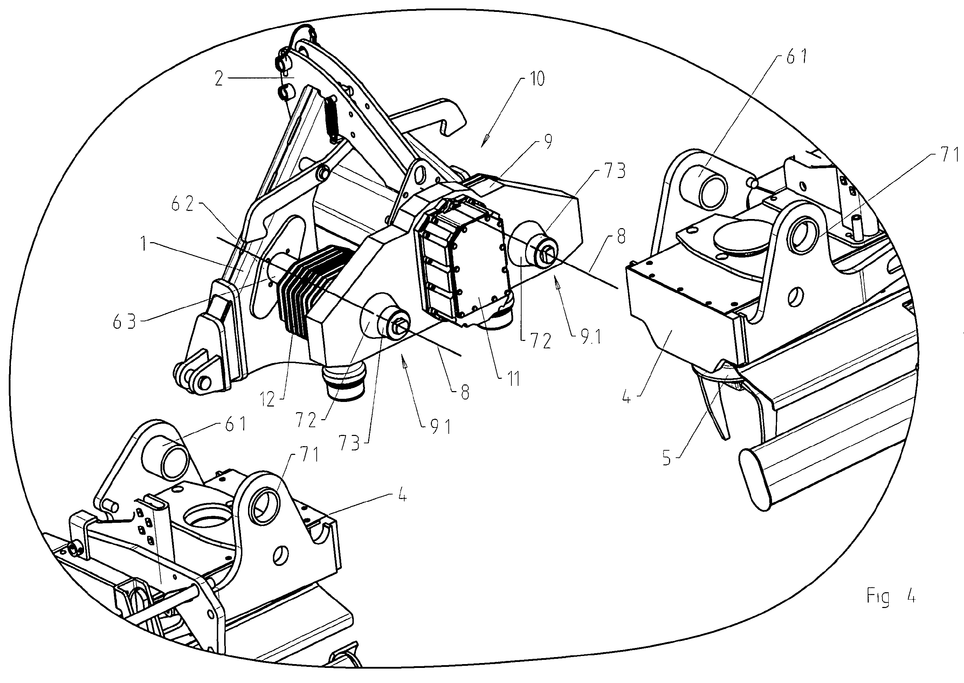

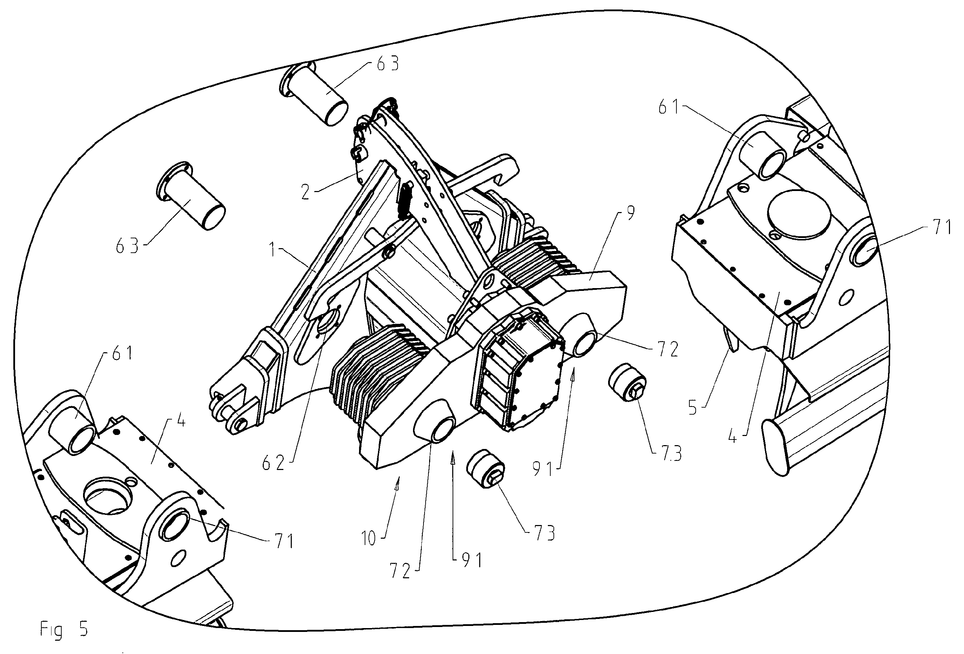

Die Bodenbearbeitungsmaschine gemäß den Fig. 1 bis 6 weist einen Mittelrahmen 1 auf, auf dessen Vorderseite Dreipunktkupplungselemente 2 zum Anbau an dem Dreipunktkraftheber eines Ackerschleppers angeordnet sind. An dem Mittelrahmen 1 sind zwei unmittelbar aneinander anschließende sich quer zur Fahrtrichtung 3 erstreckende und jeweils als Kastenbalken 4 ausgebildete Tragrahmen mit einer Mehrzahl um aufrechte Achsen angetriebenen Werkzeugkreiseln 5 mittels Schwenkgelenken 6 und 7, deren Gelenkachsen 8 in Fahrtrichtung 3 weisen, angeordnet. Die Kastenbalken 4 sind aufgrund ihrer Anordnung mittels Schwenkgelenken 6 und 7 an dem Mittelrahmen 1 um die in Fahrtrichtung 3 verlaufenden Gelenkachsen 8 aus der in Fig.1 dargestellten etwa horizontalen Arbeitsposition um etwa 90° in die in Fig.2 dargestellten etwa vertikale Transportposition zu verschwenken. Hierzu sind zwischen dem Mittelrahmen 1 und den Kastenbalken 4 nicht dargestellte motorische Stellelemente, beispielsweise doppeltwirkende Hydraulikzylinder angeordnet.

Die Schwenkgelenke 6 und 7 weisen an den einander benachbarten Endbereiche der Kastenbalken 4 auf ihrer Vorder- und Rückseite tragende Gelenkelemente 6.1, 7.1 auf. Die Schwenkgelenke 6 und 7 weisen weiterhin am Tragrahmen 4 angeordnete Gelenkelemente 6.2, 7.2 auf, welche mit den an den Kastenbalken 4 angeordneten Gelenkelementen 6.1, 7.1 zusammenwirken und so die Schwenkgelenke6 und 7 gemeinsam mit den zugeordneten Gelenkbolzen 6.3, 7.3 bilden.

Die Kastenbalken 4 sind als Getriebegehäuse ausgebildet, in welchen die Werkzeugkreisel 5 gelagert sind. In den Kastenbalken 4 sind Stirnräder angeordnet, die auf den Wellen der Werkzeugkreisel 5 angeordnet sind. Einander benachbarte Werkzeugkreisel 5 werden über die Stirnräder im einander entgegengesetzten Drehsinn angetrieben.

An dem Mittelrahmen 1 ist ein Getriebegehäuse 9 aufweisendes Zentralgetriebe 10 mit einer zentralen Antriebswelle, welche über eine Gelenkswelle mit der Zapfwelle des die Bodenbearbeitungsmaschine ziehenden Ackerschleppers verbunden und rotierend angetrieben wird, angeordnet. Weiterhin weist das Getriebegehäuse 9 des Zentralbetriebes 10 zwei beabstandet zueinander und beabstandet zu der zentralen Antriebswelle angeordnete Zwischenwellen auf, die drehbar mittels Lagern in dem Getriebegehäuse 9 des Zentralgetriebes 10 angeordnet sind. Die Drehachse der Zwischenwellen fallen mit den Gelenkachsen 8 der Schwenkgelenke 6 und 7 zusammen.
Weiterhin ist in dem Getriebegehäuse 9 des Zentralbetriebes 10 jeweils ein Stirnradgetriebe zwischen der zentralen Antriebswelle und den Zwischenwellen angeordnet. Über dieses Stirnradgetriebe werden die Zwischenwellen von der zentralen Antriebswelle angetrieben, wobei zwischen den Stirnradgetrieben und der zentralen Antriebswelle ein Zwischengetriebe 11 zur Drehzahlvariation angeordnet sein kann. Die Zwischenwellen treiben jeweils über ein Winkelgetriebe aufweisendes Zwischengetriebe 12 die in den Kastenbalken 4 gelagerten Werkzeugkreiseln 5 rotierend an. Hierzu ist die Abtriebswelle des Zwischenbetriebes in geeigneter Weise kraftschlüssig mit einem einem Werkzeugkreisel 5 zugeordneten Stirnrad verbunden.

Die beiden vorderen Gelenkelemente 6.2 des Mittelrahmens 1 sind Bestandteil des Mittelrahmens 1. Die vorderen Gelenkelemente 6.1, 6.2 der vorderen Schwenkgelenke 6 werden über einen in die Lagerung 6.1, 6.2 der Schwenkgelenke 6 einschiebbaren Gelenkbolzen 6.3 miteinander verbunden. Dieser Gelenkbolzen 6.3 wird in seiner eingeschobenen Position mittels als Schrauben ausgebildeter Sicherungselemente gesichert.

Auf der Rückseite des Mittelrahmens 1 ist das Getriebegehäuse 9 des Zentralgetriebes 10 angeordnet. Der Bereich 9.1 Getriebegehäuses 9 des Zentralgetriebes 10, in dem die Zwischenwellen und das die Zwischenwellen mit der zentralen Antriebswelle verbindende Stirnradgetriebe angeordnet sind, ist tragender Bestandteil des Mittelrahmens 1. In dem Bereich der jeweiligen Lagerung der Zwischenwellen ist an dem Gehäuse 9, 9.1 des Zentralgetriebes 10 das hintere Gelenkelement 7.2, 7.3 des hinteren Schwenkgelenkes 7 angeordnet. Somit ist das Getriebegehäuse 9, 9.1 des Zentralgetriebes 10 tragender Bestandteil des Mittelrahmens 1 und bildet auf jeder Seite der Bodenbearbeitungsmaschine zumindest ein Gelenkelement 7.2, 7.3 des hinteren Schwenkgelenkes 7 am Mittelrahmen 1. Dieses an dem Gehäuse 9, 9.1 des Zentralgetriebe 10 angeordnete Gelenkelement 7.2, 7.3 des hinteren Schwenkgelenkes 7 wird von einem in das Getriebegehäuse 9, 9.1 einschraubbaren Schwenkbolzen 7.3 gebildet. An diesem von dem Schwenkbolzen 7.3 gebildeten Gelenkelement 7, welches an dem Getriebegehäuse 9, 9.1 des Zentralgetriebes 10 angeordnet ist, ist das hintere Gelenkelement 7 des als Kastenbalken 4 ausgebildete Tragrahmen angelenkt. Somit sind jeweils zumindest ein Gelenkelement 7.1 des Tragrahmens 4 und der durch den in das Getriebegehäuse 7.2, 9, 9.1 einschraubbaren Gelenkbolzen 7.3 als Gelenkelement 7 ausgebildete äußere Bereich 9.1 des Getriebegehäuses 9 des Zentralgetriebes 10 ein tragendes Bauteil des Schwenkgelenkes 7 bzw. des Mittelrahmens 1. Somit sind auf der Seite, auf der das Getriebegehäuse 9, 9.1 des Zentralgetriebes 10 angeordnet ist, die Gelenkelemente 7.1, 7.2, 7.3 dieser Schwenkgelenke 7 nur am Getriebegehäuse 9, 9.1 angeordnet. Die Gelenkelemente 7.1, 7.2, 7.3 dieser Schwenkgelenke 7 werden nur von den am Getriebegehäuse 9, 9.1 des Zentralgetriebes 10 angeordneten Schwenkelementen 7.1, 7.2, 7.3 gebildet.

Das an dem Zentralgetriebe 10 angeordnete Schwenkelement 7 ist als Gelenkbolzen 7.3 ausgebildet. Auf dem Außenumfang des Gelenkbolzens 7.3 ist das Schwenkelement 7.1 des Tragrahmens 4 den Gelenkbolzen 7.3 umgreifend angeordnet.

Wenn das Schwenkelement am Zentralgetriebe als Gelenkhülse ausgebildet ist, kann in der Gelenkhülse zumindest teilweise die Zwischenwelle gelagert sein.

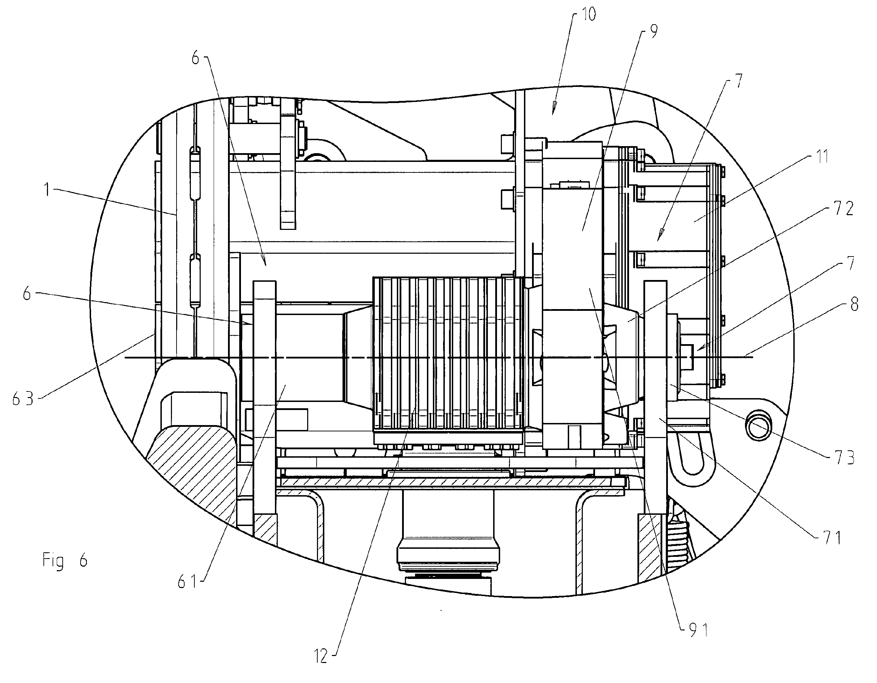

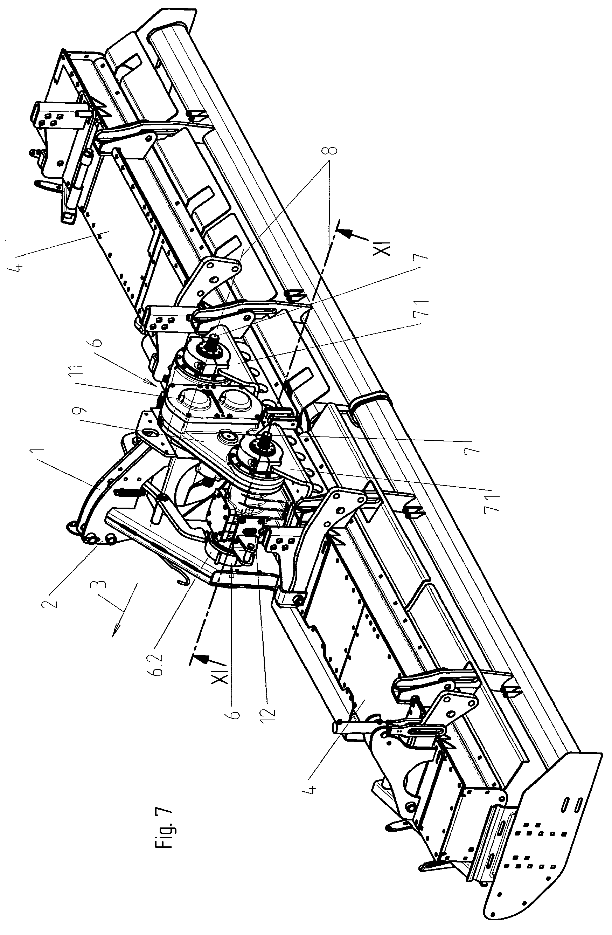

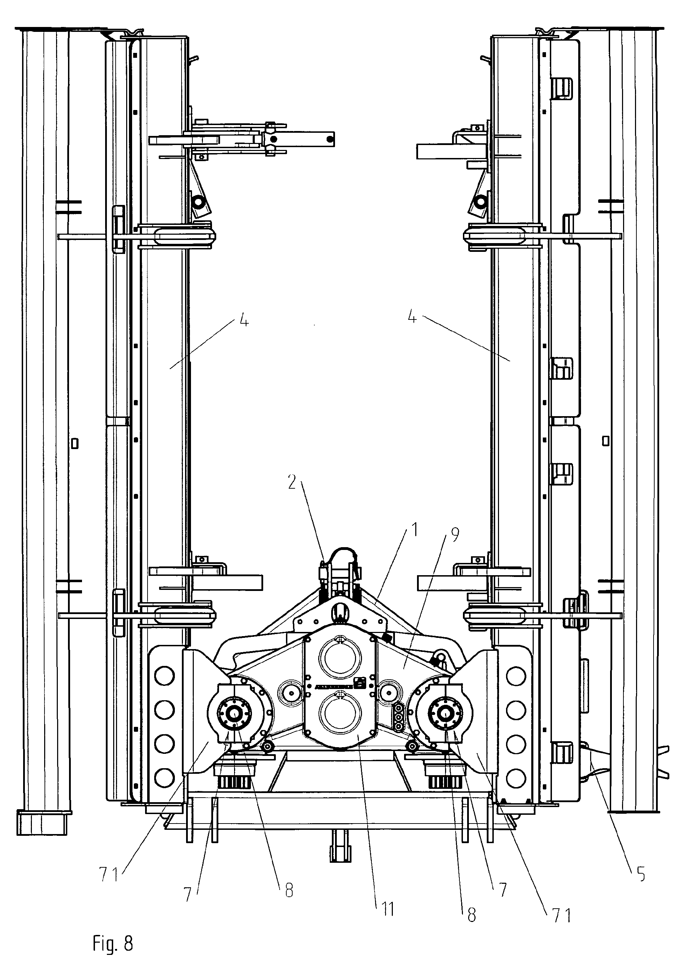

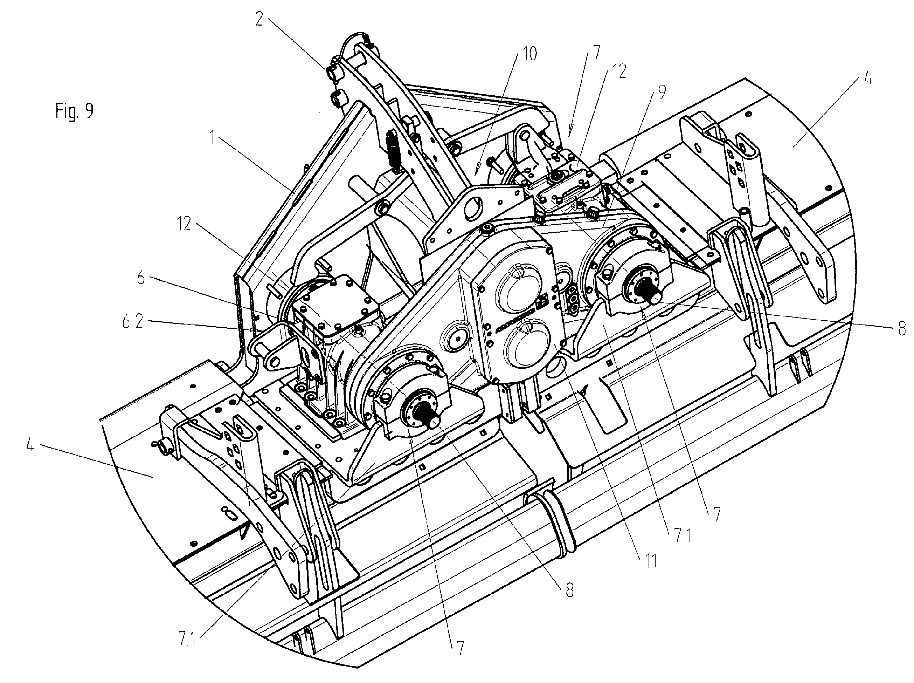

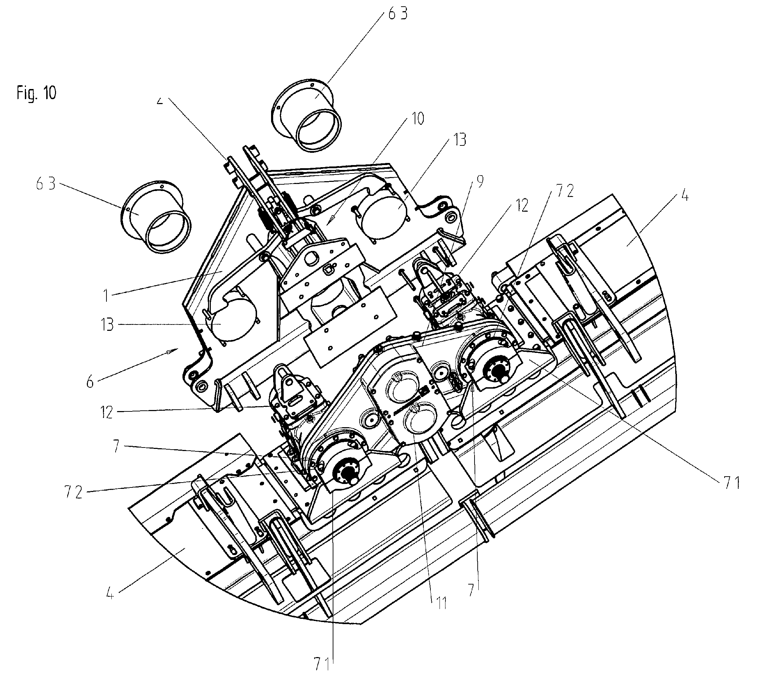

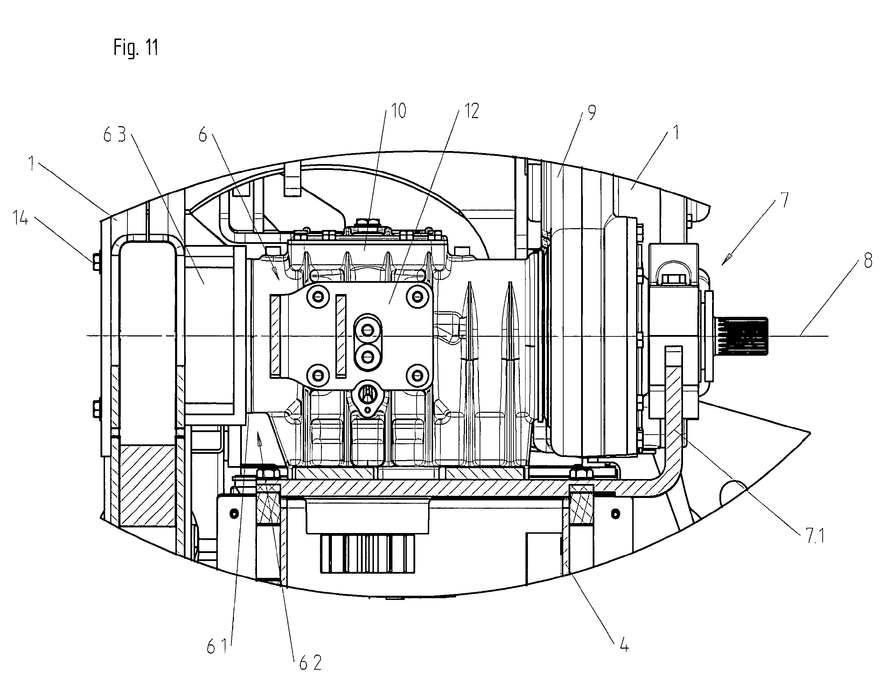

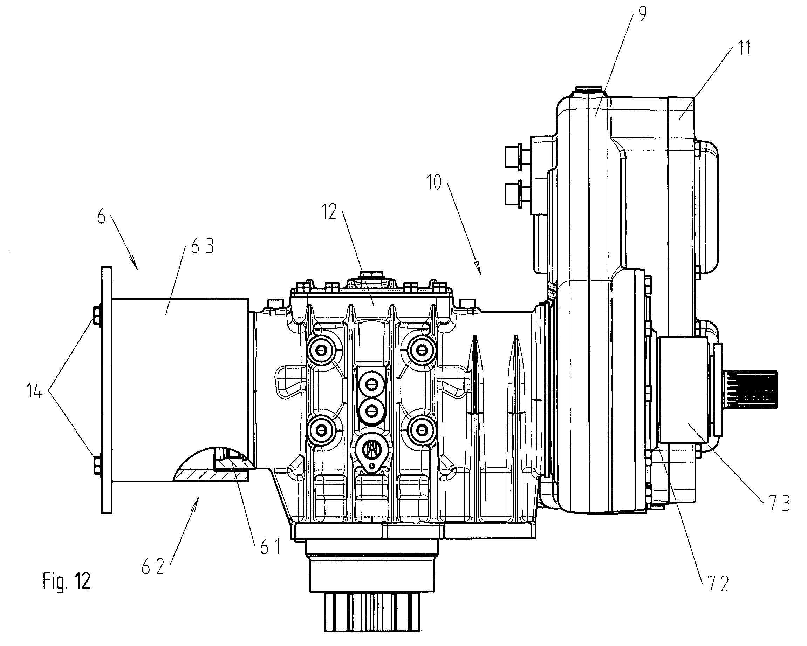

Die Bodenbearbeitungsmaschine gemäß den Fig. 7 bis 12 weist einen Mittelrahmen 1 auf, auf dessen Vorderseite Dreipunktkupplungselemente 2 zum Anbau an dem Dreipunktkraftheber eines Ackerschleppers angeordnet sind. An dem Mittelrahmen 1 sind zwei unmittelbar aneinander anschließende sich quer zur Fahrtrichtung 3 erstreckende und jeweils als Kastenbalken 4 ausgebildete Tragrahmen mit einer Mehrzahl um aufrechte Achsen angetriebenen Werkzeugkreiseln 5 mittels Schwenkgelenken 6 und 7, deren Gelenkachsen 8 in Fahrtrichtung 3 weisen, angeordnet. Die Kastenbalken 4 sind aufgrund ihrer Anordnung mittels Schwenkgelenken 6 und 7 an dem Mittelrahmen 1 um die in Fahrtrichtung 3 verlaufenden Gelenkachsen 8 aus der in Fig.7 dargestellten etwa horizontalen Arbeitsposition um etwa 90° in die in Fig.6 dargestellten etwa vertikale Transportposition zu verschwenken. Hierzu sind zwischen dem Mittelrahmen 1 und den Kastenbalken 4 nicht dargestellte motorische Stellelemente, beispielsweise doppeltwirkende Hydraulikzylinder angeordnet.

Die Kastenbalken 4 sind als Getriebegehäuse ausgebildet, in welchen die Werkzeugkreisel 5 gelagert sind. In den Kastenbalken 4 sind Stirnräder angeordnet, die auf den Wellen der Werkzeugkreisel 5 angeordnet sind. Einander benachbarte Werkzeugkreisel 5 werden über die Stirnräder im einander entgegengesetzten Drehsinn angetrieben.

An dem Mittelrahmen 1 ist ein Getriebegehäuse 9 aufweisendes Zentralgetriebe 10 mit einer zentralen Antriebswelle, welche über eine Gelenkswelle mit der Zapfwelle des die Bodenbearbeitungsmaschine ziehenden Ackerschleppers verbunden und rotierend angetrieben wird, angeordnet. Weiterhin weist das Getriebegehäuse 9 des Zentralbetriebes 10 zwei beabstandet zueinander und beabstandet zu der zentralen Antriebswelle angeordnete Zwischenwellen auf, die drehbar mittels Lagern in dem Getriebegehäuse 9 des Zentralgetriebes 10 angeordnet sind. Die Drehachse der Zwischenwellen fallen mit den Gelenkachsen 8 der Schwenkgelenke 6 und 7 zusammen.

Weiterhin ist in dem Getriebegehäuse 9 des Zentralbetriebes 10 jeweils ein Stirnradgetriebe zwischen der zentralen Antriebswelle und den Zwischenwellen angeordnet. Über dieses Stirnradgetriebe werden die Zwischenwellen von der zentralen Antriebswelle angetrieben, wobei zwischen den Stirnradgetrieben und der zentralen Antriebswelle ein Zwischengetriebe 11 zur Drehzahlvariation angeordnet sein kann. Die Zwischenwellen treiben jeweils über ein Winkelgetriebe aufweisendes Zwischengetriebe 12 die in den Kastenbalken 4 gelagerten Werkzeugkreiseln 5 rotierend an. Hierzu ist die Abtriebswelle des Zwischenbetriebes in geeigneter Weise kraftschlüssig mit einem einem Werkzeugkreisel 5 zugeordneten Stirnrad verbunden.

Die Schwenkgelenke 7 weisen an den einander benachbarten Endbereichen der Kastenbalken 4 auf ihrer Rückseite tragende Gelenkelemente 7.1 auf. Die Schwenkgelenke 7 weisen weiterhin am Tragrahmen 4 angeordnete Gelenkelemente 7.2 auf, welche mit den an den Kastenbalken 4 angeordneten Gelenkelementen 7.1 zusammenwirken und so die Schwenkgelenke 7 gemeinsam mit den zugeordneten Gelenkbolzen 7.3 bilden.

Die Schwenkgelenke 6 weisen an den einander benachbarten Endbereichen der Kastenbalken 4 auf ihrer Vorderseite tragende Gelenkelemente 6.1 auf. Diese Gelenkelemente 6.1 der Schwenkgelenke 6 sind die als wellenähnliche Ansatzstutzen, die an dem jeweiligen Getriebegehäuse des Zwischengetriebes 12, welches am als Kastenbalken ausgebildeten Tragrahmen 4 angeordnet ist, ausgebildet. Somit ist jeweils eine der an dem Kastenbalken 4 angeordneten Gelenklaschen von dem Getriebegehäuse des Zwischengetriebes 12 gebildet. Im jedem vorderen seitlichen Bereich des Mittelrahmens 1 ist jeweils eine kreisförmige Aussparung 13 angebracht. In diese kreisförmigen Aussparungen 13 sind die hülsenartigen Lagerbuchsen 6.3 eingeschoben, welche quasi den Gelenkbolzen bilden. Diese Lagerbuchsen 6.3 sind jeweils auf die wellenähnlichen Ansatzstutzen 6.1 des Getriebegehäuses des Zwischengetriebes 12 geschoben.

Das jeweilige Getriebegehäuse des Zwischengetriebes 12 bildet also die vordere Gelenklasche 6.1 der Schwenkgelenke 6.

Die vorderen Gelenkelemente 6.1 der vorderen Schwenkgelenke 6 werden über den einschiebbaren Gelenkbolzen 6.3 miteinander verbunden. Dieser als Lagerbuchse ausgebildete Gelenkbolzen 6.3 ist in seiner eingeschobenen Position mittels als Schrauben 14 ausgebildeter Sicherungselemente am Mittelrahmen befestigt und gesichert.

Auf der Rückseite des Mittelrahmens 1 ist das Getriebegehäuse 9 des Zentralgetriebes 10 angeordnet. Der Bereich 9.1 Getriebegehäuses 9 des Zentralgetriebes 10, in dem die Zwischenwellen und das die Zwischenwellen mit der zentralen Antriebswelle verbindende Stirnradgetriebe angeordnet sind, ist tragender Bestandteil des Mittelrahmens 1. In dem Bereich der jeweiligen Lagerung der Zwischenwellen ist an dem Gehäuse 9, 9.1 des Zentralgetriebes 10 das hintere Gelenkelement 7.2, 7.3 des hinteren Schwenkgelenkes 7 angeordnet. Somit ist das Getriebegehäuse 9, 9.1 des Zentralgetriebes 10 tragender Bestandteil des Mittelrahmens 1 und bildet auf jeder Seite der Bodenbearbeitungsmaschine zumindest ein Gelenkelement 7.2, 7.3 des hinteren Schwenkgelenkes 7 am Mittelrahmen 1. Dieses an dem Gehäuse 9, 9.1 des Zentralgetriebe 10 angeordnete Gelenkelement 7.2, 7.3 des hinteren Schwenkgelenkes 7 wird von einem in das Getriebegehäuse 9, 9.1 einschraubbaren Schwenkbolzen 7.3 gebildet. An diesem von dem Schwenkbolzen 7.3 gebildeten Gelenkelement 7, welches an dem Getriebegehäuse 9, 9.1 des Zentralgetriebes 10 angeordnet ist, ist das hintere Gelenkelement 7 des als Kastenbalken 4 ausgebildete Tragrahmen angelenkt. Somit sind jeweils zumindest ein Gelenkelement 7.1 des Tragrahmens 4 und der durch den in das Getriebegehäuse 7.2, 9, 9.1 einschraubbaren Gelenkbolzen 7.3 als Gelenkelement 7 ausgebildete äußere Bereich 9.1 des Getriebegehäuses 9 des Zentralgetriebes 10 ein tragendes Bauteil des Schwenkgelenkes 7 bzw. des Mittelrahmens 1. Somit sind auf der Seite, auf der das Getriebegehäuse 9, 9.1 des Zentralgetriebes 10 angeordnet ist, die Gelenkelemente 7.1, 7.2, 7.3 dieser Schwenkgelenke 7 nur am Getriebegehäuse 9, 9.1 angeordnet. Die Gelenkelemente 7.1, 7.2, 7.3 dieser Schwenkgelenke 7 werden nur von den am Getriebegehäuse 9, 9.1 des Zentralgetriebes 10 angeordneten Schwenkelementen 7.1, 7.2, 7.3 gebildet.

Das an dem Zentralgetriebe 10 angeordnete Schwenkelement 7 ist als Gelenkbolzen 7.3 ausgebildet. Auf dem Außenumfang des Gelenkbolzens 7.3 ist das Schwenkelement 7.1 des Tragrahmens 4 den Gelenkbolzen 7.3 umgreifend angeordnet.

## Patentansprüche

1. Bodenbearbeitungsmaschine mit einem Dreipunktkupplungselemente aufweisenden Mittelrahmen, an denen zwei unmittelbar aneinander anschließende sich quer zur Fahrtrichtung erstreckende und jeweils als Kastenbalken ausgebildete Tragrahmen mit einer Mehrzahl um aufrechte Achsen angetriebenen Werkzeugkreiseln mittels tragende Gelenkelemente aufweisende Schwenkgelenke, deren Gelenkachsen in Fahrtrichtung weisen, aus einer etwa horizontalen Arbeitsstellung in eine etwa vertikale Transportstellung verschwenkbar angeordnet sind, wobei an dem Mittelrahmen ein ein Getriebegehäuse aufweisendes Zentralgetriebe mit einer zentralen Antriebswelle und zwei beabstandet zueinander und beabstandet zu der zentralen Antriebswelle angeordnete Zwischenwellen angeordnet sind, wobei zwischen der zentralen Antriebswelle und den beiden Zwischenwellen in dem Getriebegehäuse jeweils ein Stirnradgetriebe angeordnet ist, wobei die Drehachsen der Zwischenwellen jeweils mit den Gelenkachsen der Schwenkgelenke zusammenfallen, wobei die Zwischenwellen jeweils mit den in den Kastenbalken gelagerten Werkzeugkreisel antreibenden Antriebselemente kraftschlüssig verbunden sind, **dadurch gekennzeichnet, dass** das Getriebegehäuse (9, 9.1) des Zentralgetriebes (10) tragender Bestandteil des Mittelrahmens (1) ist und auf jeder Seite der Bodenbearbeitungsmaschine zumindest ein Gelenkelement (7.1, 7.2, 7.3) eines Schwenkgelenkes (7) des Mittelrahmens (1) bildet.

2. Bodenbearbeitungsmaschine nach Anspruch 1, **dadurch gekennzeichnet, dass** das jeweilige Gelenkelement (7.1) des Tragrahmens (4) an dem an dem Getriebegehäuse (9, 9.1) des Zentralgetriebes (10) angeordnetem Gelenkelement (7.2, 7.3) angelenkt ist.

3. Bodenbearbeitungsmaschine nach Anspruch 1, **dadurch gekennzeichnet, dass** jeweils ein Gelenkelement (7.1) des Tragrahmens (4) und der als Gelenkelement (7.2, 7.3) ausgebildete äußere Bereich (9.1) des Getriebegehäuses (9) des Zentralgetriebes (10) ein tragendes Bauteil der Schwenkgelenkes (7) und/oder Mittelrahmens (1) sind.

4. Bodenbearbeitungsmaschine nach zumindest einem der vorstehenden Ansprüche, **dadurch gekennzeichnet, dass** das an dem Zentralgetriebe (10) angeordnete Schwenkelement als Gelenkbolzen (7.3) oder als Gelenkhülse ausgebildet ist, dass auf dem Außenumfang des Gelenkbolzens (7.3) oder der Gelenkhülse das Schwenkelement (7.1) des Tragrahmens (4) den Gelenkbolzen (7.3) oder die Gelenkhülse umgreifend angeordnet ist.

5. Bodenbearbeitungsmaschine nach zumindest einem der vorstehenden Ansprüche, **dadurch gekennzeichnet, dass** in der Gelenkhülse zumindest teilweise die Zwischenwelle gelagert ist.

6. Bodenbearbeitungsmaschine nach zumindest einem der vorstehenden Ansprüche, wobei auf der Vorder- und Rückseite des Tragrahmens und des jeweiligen Tragrahmen ein die Schwenkelemente aufweisendes Schwenkgelenk vorgesehen ist, **dadurch gekennzeichnet, dass** auf der Seite, auf der das Getriebegehäuse (9, 9.1) angeordnet ist, die Gelenkelemente (7.1, 7.2, 7.3) des Schwenkgelenkes (7) nur am Getriebegehäuse (9, 9.1) angeordnet sind.

7. Bodenbearbeitungsmaschine nach zumindest einem der vorstehenden Ansprüche, wobei auf der Vorder- und Rückseite des Tragrahmens und des jeweiligen Tragrahmen ein die Schwenkelemente aufweisendes Schwenkgelenk vorgesehen ist, **dadurch gekennzeichnet, dass** auf der Seite, auf der das Getriebegehäuse (9, 9.1) angeordnet ist, die Gelenkelemente (7.1, 7.2, 7.3) des Schwenkgelenkes (7) nur von den am Getriebegehäuse (9, 9.1) des Zentralgetriebes (10) angeordneten Schwenkelementen (7.1, 7.2, 7.3) gebildet werden.

8. Bodenbearbeitungsmaschine nach Anspruch 1 **dadurch gekennzeichnet, dass** jeweils eine der an dem Kastenbalken (4) angeordneten Gelenklaschen (6.1) von dem Getriebegehäuse des Zwischengetriebes (12) gebildet wird.

9. Bodenbearbeitungsmaschine nach Anspruch 8, **dadurch gekennzeichnet, dass** das jeweilige Getriebegehäuse des Zwischengetriebes (6.1) die vordere Gelenklasche (6.1) der Schwenkgelenke (6) bildet.

## Claims

1. Soil working machine with a central frame having three-point coupling elements on which two supporting frames, which are directly connected to each other, extend transversely with respect to the direction of travel and are in each case designed as box bars, and have a plurality of rotary tools present about vertical axes, are arranged so as to be pivotable from an approximately horizontal working position into an approximately vertical transport position by means of swivel joints which have supporting joint elements and the joint axes of which point in the direction of travel, wherein a central gearing having a gearing housing and a central drive shaft, and two intermediate shafts which are arranged spaced apart from each other and spaced apart from the central drive shaft, are arranged on the central frame, wherein a spur gearing is arranged in each case in the gearing housing between the central drive shaft and the two intermediate shafts, wherein the axes of rotation of the intermediate shafts each coincide with the joint axes of the swivel joints, wherein the intermediate shafts are each connected non-positively to the driving elements driving rotary tools mounted in the box bars, **characterized in that** the gearing housing (9, 9.1) of the central gearing (10) is a supporting part of the central frame (1) and forms at least one joint element (7.1, 7.2, 7.3) of a swivel joint (7) of the central frame (1) on each side of the soil working machine.

2. Soil working machine according to Claim 1, **characterized in that** the respective joint element (7.1) of the supporting frame (4) is coupled to the joint element (7.2, 7.3) arranged on the gearing housing (9, 9.1) of the central gearing (10).

3. Soil working machine according to Claim 1, **characterized in that** one joint element (7.1) in each case of the supporting frame (4) and the outer region (9.1) of the gearing housing (9) of the central gearing (10), which outer region is designed as a joint element (7.2, 7.3), are a supporting component of the swivel joint (7) and/or central frame (1).

4. Soil working machine according to at least one of the preceding claims, **characterized in that** the swivel element arranged on the central gearing (10) is designed as a joint bolt (7.3) or as joint sleeve, **in that**, on the outer circumference of the joint bolt (7.3) or of the joint sleeve, the swivel element (7.1) of the supporting frame (4) is arranged engaging around the joint bolt (7.3) or the joint sleeve.

5. Soil working machine according to at least one of the preceding claims, **characterized in that** the intermediate shaft is at least partially mounted in the joint sleeve.

6. Soil working machine according to at least one of the preceding claims, wherein a swivel joint having the swivel elements is provided on the front side and rear side of the supporting frame and of the respective supporting frame, **characterized in that**, on the side on which the gearing housing (9, 9.1) is arranged, the joint elements (7.1, 7.2, 7.3) of the swivel joint (7) are arranged only on the gearing housing (9, 9.1).

7. Soil working machine according to at least one of the preceding claims, wherein a swivel joint having the swivel elements is provided on the front side and rear side of the supporting frame and of the respective supporting frame, **characterized in that**, on the side on which the gearing housing (9, 9.1) is arranged, the joint elements (7.1, 7.2, 7.3) of the swivel joint (7) are formed only by the swivel elements (7.1, 7.2, 7.3) arranged on the gearing housing (9, 9.1) of the central gearing (10).

8. Soil working machine according to Claim 1, **characterized in that** in each case one of the joint plates (6.1) arranged on the box bar (4) is formed by the gearing housing of the intermediate gearing (12).

9. Soil working machine according to Claim 8, **characterized in that** the respective gearing housing of the intermediate gearing (6.1) forms the front joint plate (6.1) of the swivel joints (6).

## Revendications

1. Machine de traitement de sol avec un châssis central comportant des éléments de couplage à trois points au niveau desquels deux cadres porteurs directement connexes s'étendant transversalement à la direction de conduite et respectivement réalisés sous la forme d'une poutre en caisson sont disposés de façon à pouvoir pivoter, avec une pluralité d'outils rotatifs entraînés autour d'axes droits à l'aide d'articulations pivotantes comportant des éléments articulés porteurs dont les axes d'articulation sont orientés dans la direction de conduite, d'une position de travail approximativement horizontale dans une position de transport approximativement verticale, un engrenage central comportant un carter d'engrenage étant disposé au niveau du châssis central, avec un arbre d'entraînement central et deux arbres intermédiaires disposés à une certaine distance l'un de l'autre et à une certaine distance de l'arbre d'entraînement central, un engrenage à roue avant étant respectivement disposé entre l'arbre d'entraînement central et les deux arbres intermédiaires dans le carter d'engrenage, les axes de rotation des arbres intermédiaires coïncidant respectivement avec les axes d'articulation des articulations pivotantes, les arbres intermédiaires étant respectivement reliés par complémentarité de forces aux éléments d'entraînement entraînant les outils rotatifs disposés dans la poutre en caisson, **caractérisée en ce que** le carter d'engrenage (9, 9.1) de l'engrenage central (10) est un composant porteur du châssis central (1) et forme sur chaque côté de la machine de traitement de sol au moins un élément d'articulation (7.1, 7.2, 7.3) d'une articulation pivotante (7) du châssis central (1).

2. Machine de traitement de sol selon la revendication 1, **caractérisée en ce que** l'élément d'articulation (7.1) respectif du cadre porteur (4) est articulé à l'élément d'articulation (7.2, 7.3) disposé au niveau du carter d'engrenage (9, 9.1) de l'engrenage central (10).

3. Machine de traitement de sol selon la revendication 1, **caractérisée en ce que** respectivement un élément d'articulation (7.1) du cadre porteur (4) et la région extérieure (9.1), réalisée sous la forme de l'élément d'articulation (7.2, 7.3), du carter d'engrenage (9) de l'engrenage central (10) est un composant porteur de l'articulation pivotante (7) et/ou du châssis central (1).

4. Machine de traitement de sol selon au moins l'une quelconque des revendications précédentes, **caractérisée en ce que** l'élément pivotant disposé au niveau de l'engrenage central (10) est réalisé sous la forme d'un boulon d'articulation (7.3) ou d'une douille d'articulation, que l'élément pivotant (7.1) du cadre porteur (4) est disposé sur la périphérie extérieure du boulon d'articulation (7.3) ou de la douille d'articulation de façon à engrener le boulon d'articulation (7.3) ou la douille d'articulation.

5. Machine de traitement de sol selon au moins l'une quelconque des revendications précédentes, **caractérisée en ce que** l'arbre intermédiaire est disposé au moins en partie dans la douille d'articulation.

6. Machine de traitement de sol selon au moins l'une quelconque des revendications précédentes, une articulation pivotante comportant les éléments pivotants étant prévue sur le côté avant et le côté arrière du cadre porteur et du cadre porteur respectif, **caractérisée en ce que** les éléments articulés (7.1, 7.2, 7.3) de l'articulation pivotante (7) ne sont disposés qu'au niveau du carter d'engrenage (9, 9.1) sur le côté sur lequel le carter d'engrenage (9, 9.1) est disposé.

7. Machine de traitement de sol selon au moins l'une quelconque des revendications précédentes, une articulation pivotante comportant les éléments pivotants étant prévue sur le côté avant et le côté arrière du cadre porteur et du cadre porteur respectif, **caractérisée en ce que** les éléments articulés (7.1, 7.2, 7.3) de l'articulation pivotante (7) ne sont formés que par les éléments pivotants (7.1, 7.2, 7.3) disposés au niveau du carter d'engrenage (9, 9.1) de l'engrenage central (10) sur le côté sur lequel le carter d'engrenage (9, 9.1) est disposé.

8. Machine de traitement de sol selon la revendication 1, **caractérisée en ce que** respectivement une des brides articulées (6.1) disposée au niveau de la poutre en caisson (4) est formée par le carter d'engrenage de l'engrenage intermédiaire (12).

9. Machine de traitement de sol selon la revendication 8, **caractérisée en ce que** le carter d'engrenage respectif de l'engrenage intermédiaire (6.1) forme la bride articulée (6.1) avant des articulations pivotantes (6).
